# EUROPÄISCHE PATENTSCHRIFT

(11) **EP 3 249 246 B1**
(45) Veröffentlichungstag und Bekanntmachung des Hinweises auf die Patenterteilung: **14.06.2023**
(21) Anmeldenummer: 17166152.3
(22) Anmeldetag: 12.04.2017
(51) Int. Cl.: F16B 45/02, A01K 27/00

(54) **KARABINERHAKEN**
CARABINER
MOUSQUETON

(30) Priorität: 23.05.2016 DE 102016109408
(43) Veröffentlichungstag der Anmeldung: 29.11.2017
(73) Patentinhaber: Schmitz GmbH, 42579 Heiligenhaus (DE)
(72) Erfinder: Schmitz, Hans-Jörg, 42579 Heiligenhaus (DE)
(74) Vertreter: Bauer, Dirk

(56) Entgegenhaltungen:
- GB-A- 128 412
- US-A1- 2005 011 058
- US-A1- 2013 232 741
- US-A1- 2015 345 539

## Beschreibung

Die Erfindung betrifft einen Karabinerhaken gemäß dem Oberbegriff des Patentanspruchs 1.

Gemäß Brockhaus-Enzyklopädie, 19. Auflage, Bd. 11, Seite 450, ist ein Karabinerhaken per Definition "ein Haken, der durch eine federnde Zunge zur geschlossenen Öse wird".

Bei bekannten, in vielfältiger Weise verwendbaren Karabinerhaken besteht die Möglichkeit, dass die Schließzunge, auch als Schnapper bezeichnet, bei Extrembelastung nach innen weggedrückt wird, so dass ein in den Karabinerhaken eingehängter Ring unbeabsichtigt aus dem Karabinerhaken durch Wegdrücken der Schließzunge aus ihrer Anlagestellung gegen die Innenseite des in Richtung des Fußabschnitts gebogenen Abschnitts des Kopfabschnitts heraus gleiten kann. Diese Möglichkeit des unbeabsichtigten Öffnens des Karabinerhakens besteht insbesondere dann, wenn in den Karabinerhaken ein Ring eingehängt ist, der an einem Tierhalsband, insbesondere Hundehalsband, befestigt ist und das Tier, insbesondere der Hund, durch extreme Kopfbewegungen versucht, von der Hundeleine bzw. dem Gurt freizukommen, die bzw. der an der an dem Fußabschnitt des Karabinerhakens befindlichen Öse befestigt ist. In der GB 128 412 ist ein Karabinerhaken gemäß dem Oberbegriff des Patentanspruchs beschrieben. Eine Schließzunge ist schwenkbar an dem Rückenabschnitt des Karabinerhakens gelagert. Die Schließzunge liegt im Schließzustand des Karabinerhakens gegen die Innenseite des freien Endes des gebogenen Kopfabschnitts an. Ein plattenförmiges Element greift nur über einen kurzen bzw. geringen Anteil der Länge der Schließzunge zwischen die U-Profilschenkel der Schließzunge, so dass bei extremen Kopfbewegungen, z.B. eines Hundes, eine erhöhte Gefahr des Wegdrückens der Schließzunge und damit des Öffnens des Karabinerhakens besteht.

Bei einem in der US 2005/0011058 A1 beschriebenen Karabinerhaken ist zur Verhinderung eines unbeabsichtigten Öffnens des Karabinerhakens ein zusätzliches Sicherungselement in Form eines äußeren Verschlussfingers (exterior closure finger) vorgesehen, so dass zum Öffnen und Verschließen des Karabinerhakens neben der Schließzunge zusätzlich auch noch der äußere Verschlussfinger betätigt werden muss, der in keinem unmittelbaren Zusammenhang mit der eigentlichen Schließzunge steht.

In der US 2013/0232741 A1 ist ein Doppel-Karabinerhaken mit zwei Schließzungen beschrieben. Auf jeder Schließzunge ist ein entlang der Schließzunge verschiebbares Sicherungselement geführt. Zum Öffnen und Schließen jedes Karabinerhakens müssen das zusätzliche Sicherungselement und die Schließzungen betätigt werden.

Der Erfindung liegt die Aufgabe zugrunde, einen gegenüber dem Stand der Technik verbesserten Karabinerhaken zu schaffen, bei dem ein unbeabsichtigtes Öffnen des Karabinerhakens verhindert wird.

Zur Lösung dieser Aufgabe ist der erfindungsgemäße Karabinerhaken gekennzeichnet durch die Merkmale der Kennzeichen des Patentanspruchs 1.

Die Erfindung wird im Folgenden anhand der Zeichnung näher beschrieben:
Figur 1 zeigt in isometrischer Darstellung eine Seitenansicht einer ersten Ausführungsform des erfindungsgemäßen Karabinerhakens;
Figur 2 zeigt eine Draufsicht in Richtung des Pfeiles II;
Figur 3 zeigt in isometrischer Darstellung den Karabinerhaken schräg von der Seite und von unten;
Figur 4 zeigt in isometrischer Darstellung eine zweite Ausführungsform des erfindungsgemäßen Karabinerhakens;
Figur 5 zeigt eine Draufsicht des in Figur 4 dargestellten Karabinerhakens in Richtung des Pfeiles V;
Figur 6 zeigt in isometrischer Darstellung den in den Figuren 4 und 5 dargestellten Karabinerhaken schräg von der Seite und von unten;

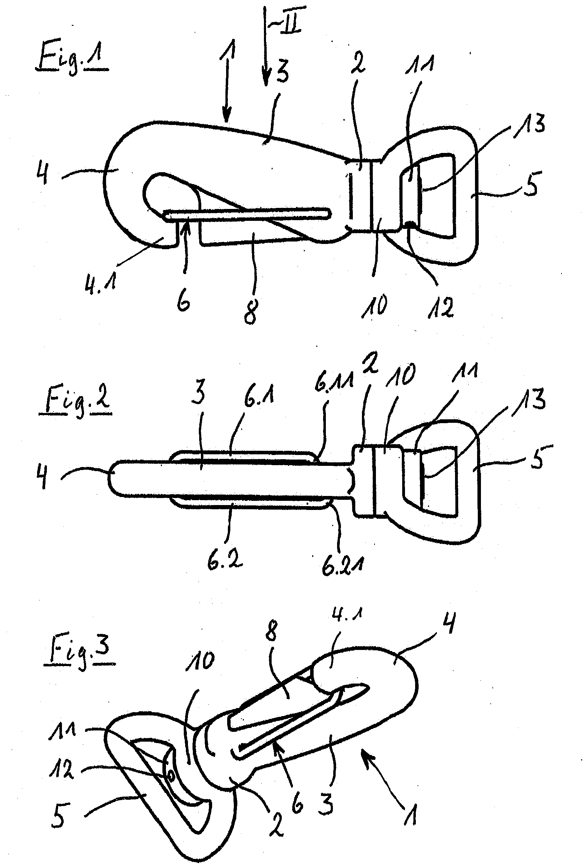

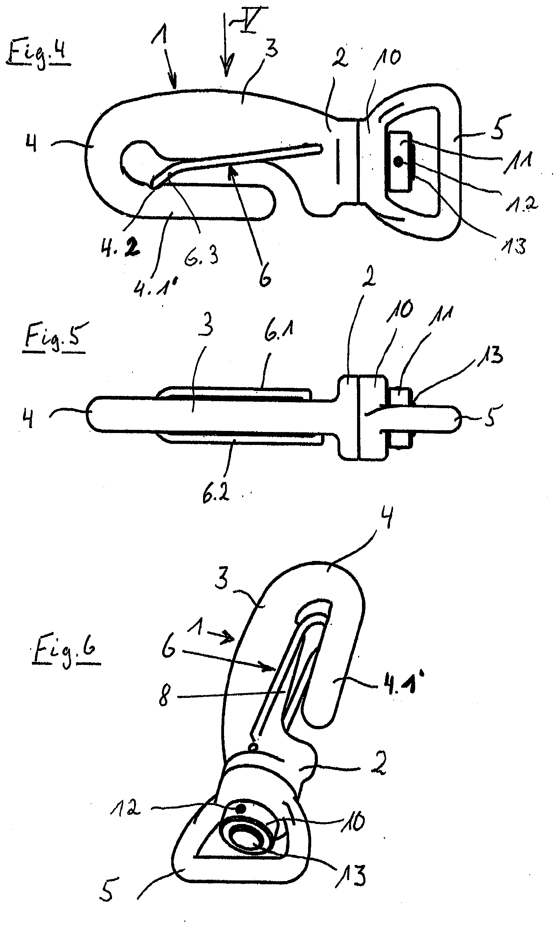

Der in den Figuren 1 bis 3 dargestellte Karabinerhaken stimmt mit dem in den Figuren 4 bis 6 dargestellten Karabinerhaken in folgenden Merkmalen überein:
Ein Hakenkörper 1 enthält
- einen Fußabschnitt 2,
- einen an den Fußabschnitt 2 anschließenden Rückenabschnitt 3,
- einen an den Rückenabschnitt 3 anschließenden, hakenförmig in Richtung des Fußabschnitts 2 gebogen Kopfabschnitt 4,
- einen am Fußabschnitt 2 angebrachten, nach außen gerichteten, durch seinen Kopfteil 13 repräsentierten Lagerzapfen, auf den ein eine Öse 5 tragender, relativ zum Fußabschnitt drehbarer Lagerring 10 und ein Sicherungsring 11 aufgeschoben sind, der an dem Schaft 13.1 des Lagerzapfens mittels eines radial gerichteten Splintes 12 gesichert ist,
- eine an dem Fußabschnitt 2 angebrachte Öse 5 zum Anbringen eines Gurtes,
- eine an dem Fußabschnitt 2 verschwenkbar gelagerte Schließzunge 6 aus einem in Form eines U-Profils bügelförmig gebogenen Stahldrahtes, wobei die U-Profilschenkel 6.1; 6.2 unterschiedliche Längen und die Enden der U-Profilschenkel 6.1, 6.2 nach innen abgebogene Enden 6.11, 6.21 haben, die in im Bereich des Fußabschnittes 2 angebrachte Lageröffnungen eingesteckt sind, derart, dass die Schließzunge 6 im Schließzustand des Karabinerhakens federnd gegen die Innenseite des in Richtung des Fußabschnitts gebogenen Endabschnitts des Kopfabschnitts 4 anliegt.

Bei den in den Figuren 1 bis 3 und in den Figuren 4 bis 6 dargestellten Ausführungsformen der Erfindung greift der zum Kopfabschnitt 4 gerichtete, plattenförmige Vorsprung 8 mit nur sehr geringem Abstand zu den U-Profilschenkeln 6.1, 6.2 zwischen die U-Profilschenkel. Dieser plattenförmige Vorsprung 8 schließt teilweise an die Innenseite der Fußabschnitte 2 und teilweise an die Innenseite der Rückenabschnitte 3 des Hakenkörpers 1 an.

Der Vorsprung 8 greift über einen Großteil der Länge der Schließzunge 6 zwischen die U-Profilschenkel 6.1, 6.2.

Bei der in den Figuren 4 bis 6 dargestellten Ausführungsform der Erfindung schließt sich an den in Richtung des Fußabschnitts gebogenen Kopfabschnitt 4 ein längerer Führungsabschnitt 4.1' an, der in seinem unmittelbar an den Kopfabschnitt angrenzenden Bereich mit einer Kerbe 4.2 versehen ist. In diese Kerbe 4.2 greift ein nach außen abgebogener, bogenförmiger Abschnitt 6.3 ein, der im Wesentlichen die Basis des U-Profils bildet.

Die Lageröffnungen für die Schließzunge 6 sind in Richtung zum Kopfabschnitt 4 des Karabinerhakens versetzt zueinander angebracht, wodurch die der Schließzunge 6 innenwohnende Federkraft bewirkt wird.

Die nach innen abgebogenen Enden 4.1 der Kopfabschnitte 4 sind zur zusätzlichen Sicherung der bügelförmigen Schließzunge 6 mit einer inneren Einkerbung versehen.

## Patentansprüche

1. Karabinerhaken zum Einhängen eines Ringes mit einem eine Öffnung aufweisenden Hakenkörper (1), der mittels einer die Öffnung verschließenden, federnden Schließzunge (6) zu einer geschlossenen Öse wird, enthaltend
a) einen Fußabschnitt (2),
an dem die Schließzunge (6) in Form eines U-Profilschenkel (6.1; 6.2) aufweisenden U-Profils aus bügelförmig gebogenem Federstahldraht verschwenkbar gelagert ist, wobei die U-Profilschenkel (6.1; 6.2) unterschiedliche Längen mit nach innen abgebogenen Enden (6.11; 6.21) haben, die in am Fußabschnitt (2) angebrachte Lageröffnungen eingesteckt sind,
b) einen an den Fußabschnitt (2) anschließenden Rückenabschnitt (3),
c) einen an den Rückenabschnitt (3) anschließenden, hakenförmig in Richtung des Fußabschnitts (2) gebogenen Kopfabschnitt (4), gegen dessen freies Ende und gegen dessen Innenseite (4.1) die Schließzunge (6) im Schließzustand des Karabinerhakens (1) anliegt,
d) eine an dem Fußabschnitt (2) angebrachte Öse (5),
e) ein zusätzliches Sicherungselement (8) zur Verhinderung des unbeabsichtigten Wegdrückens der Schließzunge (6) aus ihrer Anlagestellung gegen die Innenseite des in Richtung des Fußabschnitts (2) gebogenen Endabschnitts des Kopfabschnitts (4), wobei das Sicherungselement (8) ein zum Kopfabschnitt (4) gerichteter, plattenförmiger Vorsprung (8) ist, der zwischen die beiden U-Profilschenkel (6.1; 6.2) der Schließzunge (6) greift, und der an die Innenseite des Fußabschnitts (2) und teilweise an die Innenseite des Rückenabschnitts (3) des Hakenkörpers (1) anschließt,
**dadurch gekennzeichnet, dass**
der plattenförmige Vorsprung (8) über einen Großteil der Länge der Schließzunge (6) zwischen die beiden Profilschenkel (6.1; 6.2) greift.

2. Karabinerhaken nach Anspruch 1, **dadurch gekennzeichnet, dass** sich an den in Richtung des Fußabschnittes gebogenen Kopfabschnitt (4) ein längerer Führungsabschnitt (4.1`) anschließt, der in seinem an den Kopfabschnitt (4) angrenzenden Bereich mit einer Kerbe (4.2) versehen ist, in die ein nach außen bogenförmig abgebogener Abschnitt (6.3) der Schließzunge (6) eingreift, der die Basis der U-profilförmigen Schließzunge (6) bildet.

3. Karabinerhaken nach Anspruch 1 oder 2, **dadurch gekennzeichnet, dass** die im Bereich des Fußabschnitts (2) angebrachten Lageröffnungen für die Aufnahme der Enden (6.11, 6.22) der U-Profilschenkel (6.1, 6.2) in Richtung zum Kopfabschnitt (4) versetzt zueinander angebracht sind.

## Claims

1. Snap hook for attaching a ring comprising a hook body (1) having an opening, the hook body becoming a closed lug by means of a resilient locking tongue (6) closing the opening, containing
a) a foot section (2) on which the locking tongue (6), in the form of a U-profile made from a curved, bent spring steel wire having U-profile legs (6.1; 6.2), is pivotably mounted, wherein the U-profile legs (6.1; 6.2) have different lengths with inwardly bent ends (6.11; 6.21) which are inserted into mounting openings arranged at the foot section (2),
b) a back section (3) connecting to the foot section (2),
c) a head section (4) connecting to the back section (3) and bent in a hook shape in the direction of the foot section (2) and the locking tongue (6) contacts against its free end and against its inner side (4.1) in the closed state of the snap hook (1),
d) an eyelet (5) arranged on the foot section (2),
e) an additional securing element (8) for preventing the unintentional pushing away of the locking tongue (6) from its contact position against the inner side of the end section of the head section (4) bent in the direction of the foot section (2), wherein the securing element (8) is a plate-shaped projection (8) directed toward the head section (4) and engages between the two U-profile legs (6.1; 6.2) of the locking tongue (6) and connects to the inner side of the foot section (2) and partially to the inner side of the back section (3) of the hook body (1),
**characterized in that** the plate-shaped projection (8) engages between the two profile legs (6.1; 6.2) across a majority of the length of the locking tongue (6).

2. Snap hook according to claim 1, **characterized in that** a longer guide section (4.1'), connecting to the head section (4) bent in the direction of the foot section, is provided with a notch (4.2) in its area adjacent to the head section (4), into which notch an outwardly-bent, curved section (6.3) of the locking tongue (6) engages, which forms the basis of the U-profile locking tongue (6).

3. Snap hook according to claim 1 or 2, **characterized in that** mounting openings, arranged in the area of the foot section (2) for accommodating the ends (6.11; 6.21) of the U-profile legs (6.1; 6.2), are arranged offset to one another in the direction of the head section (4) .

## Revendications

1. Mousqueton pour accrocher un anneau avec un corps de crochet (1) comportant une ouverture, qui devient un œillet fermé au moyen d'une languette de fermeture (6) faisant ressort, fermant l'ouverture, contenant
a) une section de base (2), sur laquelle est logée pouvant pivoter la languette de fermeture (6) sous la forme d'un profilé en U en fil d'acier pour ressort recourbé en forme d'étrier comportant des branches profilées en U (6.1, 6.2), sachant que les branches profilées en U (6.1, 6.2) possèdent des longueurs différentes avec des extrémités repliées vers l'intérieur (6.11, 6.21), qui sont enfilées dans les ouvertures de logement aménagées sur la section de base (2),
b) une section arrière (3) se raccordant à la section de base (2),
c) une section de tête (4) se raccordant à la section arrière (3) en forme de crochet en direction de la section de base (2), contre l'extrémité libre de laquelle et contre le côté intérieur (4.1) de laquelle vient s'appuyer la languette de fermeture (6) à l'état de fermeture du mousqueton (1),
d) un œillet (5) aménagé sur la section de base (2),
e) un élément de sécurisation supplémentaire (8) pour éviter le repoussement involontaire de la languette de fermeture (6) de sa position d'appui contre le côté intérieure de la section finale recourbée en direction de la section de base (2) de la section de tête (4), sachant que l'élément de sécurisation (8) est une saillie (8) en forme de plaque orientée vers la section de tête (4), qui vient en prise entre les deux branches profilées en U (6.1, 6.2) de la languette de fermeture (6) et qui se raccorde au côté intérieur de la section de base (2) et en partie au côté intérieur de la section arrière (3) du corps de crochet (1),
**caractérisé en ce que** la saillie en forme de plaque (8) vient en prise sur une grande partie de la longueur de la languette de fermeture (6) entre les deux branches profilées (6.1, 6.2).

2. Mousqueton selon la revendication, **caractérisé en ce qu'**une section de guidage plus longue (4.1') se raccorde à la section de tête (4) courbée en direction de la section de base, qui est dotée dans sa zone limitrophe de la section de tête (4) d'une encoche (4.2) dans laquelle vient en prise une section (6.3) courbée en forme d'arc vers l'extérieur de la languette de fermeture (6), qui forme la base de la languette de fermeture (6) profilée en U.

3. Mousqueton selon la revendication 1 ou 2, **caractérisé en ce que** les ouvertures de logement aménagées dans la zone de la section de base (2) pour recevoir les extrémités (6.11, 6.22) des branches profilées en U (6.1, 6.2) sont aménagées en direction de la section de tête (4) décalées les unes par rapport aux autres.
